# EUROPÄISCHE PATENTANMELDUNG

(11) **EP 1 728 667 A2**
(43) Veröffentlichungstag der Anmeldung: **06.12.2006**
(21) Anmeldenummer: 06011097.0
(22) Anmeldetag: 30.05.2006
(51) Int. Cl.: B60K 11/08

(54) **Vorrichtung zur Regulierung eines Luftstroms zur Motorkühlung**

(30) Priorität: 30.05.2005 DE 102005025081; 12.01.2006 DE 102006001797
(71) Anmelder: Behr GmbH & Co. KG, 70469 Stuttgart (DE)
(72) Erfinder: Harich, Martin, Dipl.-Ing., 71638 Ludwigsburg (DE); Pantow, Eberhard, Dr.-Ing., 71696 Möglingen (DE); Spieth, Michael, Dipl.-Ing. (BA), 72810 Gomaringen (DE)

(57) **Zusammenfassung**

Die Erfindung betrifft eine Vorrichtung zur Regulierung eines Luftstroms zur Motorkühlung, umfassend ein über einem Teil einer Tauscherfläche (2) eines luftdurchströmbaren Wärmetauschers (1) angeordnetes Lüfterelement (4), und ein über einem weiteren Teil der Tauscherfläche (2) angeordnetes Abdeckelement (5), wobei das Abdeckelement (5) sich von dem Lüfterelement (4) bis zu einem Ende der Tauscherfläche (2) erstreckt und wobei das Abdeckelement (5) zum Durchlass von Luft zumindest teilweise selektierbar öffnungsfähig ist. Eine Vorrichtung, bei der ein verbesserter Wirkungsgrad des Wärmetauschers in zumindest einem Betriebszustand eines Kraftfahrzeugs vorliegt, wird erfindungsgemäß dadurch geschaffen, dass ein erster Öffnungsabschnitt (6a, 6a', 16) des Abdeckelements (5) selektierbar öffnungsfähig ist, welcher zur Vermeidung übermäßiger Rezirkulation einen Mindestabstand von dem Lüfterelement (4) aufweist, und dass zumindest ein zweiter Öffnungsabschnitt (6b-6d, 6b',6c') selektierbar öffnungsfähig ist, der im Wesentlichen an das Lüfterelement (4) angrenzt.

## Beschreibung

Die Erfindung betrifft eine Vorrichtung zur Regulierung eines Luftstroms zur Motorkühlung nach dem Oberbegriff des Anspruchs 1.

Beim Bau von Kraftfahrzeugen mit Verbrennungsmotoren besteht die Problematik, dass der Luftdurchsatz durch einen gegebenen Hauptkühler des Fahrzeugmotors in sämtlichen Fahrsituationen ausreichend sein muss. Im Zuge der Gewichtsersparnis und insbesondere im Zuge von Forderungen eines verbesserten Fußgänger-Aufprallschutzes wird allgemein die Verkleinerung von Hauptkühlern unter Beibehaltung der Wärmetauscherleistung angestrebt. Dies erfordert eine Optimierung der Luftdurchströmung der Tauscherffäche bei möglichst allen Betriebszuständen. Hierzu ist bekannt, eine Oberfläche des Wärmetauschers mit einer Lüfterhaube abzudecken, wobei in einem Bereich der Lüfterhaube ein elektrisch angetriebener Lüfter und in einem anderen Bereich der Lüfterhaube öffnungsfähige Klappen vorgesehen sind. Die öffnungsfähigen Klappen können je nach Ausführung als Staudruckklappen oder als aktiv betätigbare Klappen ausgebildet sein. In dem Fall, in dem keinerlei Klappen vorgesehen sind, wird die Luftströmung bei höheren Geschwindigkeiten behindert, da ein Überblasen des laufenden Lüfters stattfindet und kein zusätzlicher Luftmassenstrom durch Staudruckbeaufschlagung stattfinden kann. Bei Vorsehen von -zumeist horizontal angeordneten- Staudruckklappen ergibt sich zumindest im teilgeöffneten Betrieb ein hoher Widerstand, wobei Rückströmungen bzw. Rezirkulationen von erwärmter Luft in den Ansaugbereich des Lüfters zumindest teilweise vorhanden sind. Solche Rezirkulationen verringern grundsätzlich den Wirkungsgrad des Wärmetauschers. Sowohl im Falle passiver Staudruckklappen als auch im Falle aktiv gesteuerter Klappen sind daher regelmäßig Limitierungen des Wirkungsgrades durch starke Effekte von Rezirkulationen gegeben.

Es ist die Aufgabe der Erfindung, eine Vorrichtung zur Regulierung eines Luftstroms zur Motorkühlung anzugeben, bei der ein verbesserter Wirkungsgrad des Wärmetauschers in zumindest einem Betriebszustand eines Kraftfahrzeugs vorliegt.

Diese Aufgabe wird für eine eingangsgenannte Vorrichtung erfindungsgemäß mit den kennzeichnenden Merkmalen des Anspruchs 16 gelöst.

Durch das selektierbare Öffnen des ersten Öffnungsabschnitts, der von dem Lüfterelement beabstandet ist, ist es möglich in einem Teillastbereich eine fahrtwindbedingte zusätzliche Durchströmung des Wärmetauschers zu erreichen, wobei zugleich die Gefahr von Rezirkulationen der durch diesen ersten Öffnungsabschnitt geströmten Luft in das Lüfterelement hinein erheblich verringert ist. Zugleich wird aufgrund der Möglichkeit der selektierbaren Öffnung des zweiten Öffnungsabschnitts eine dem Stand der Technik entsprechende, einem höheren Lastbereich wie etwa Volllast zugeordnete großflächigere Durchströmung ermöglicht. Insgesamt ist der Wirkungsgrad des Wärmetauschers daher bei gemittelter Betrachtung über sämtliche Betriebszustände durch die erfindungsgemäße Vorrichtung verbessert.

Zur Optimierung des Bauraums und der Luftströmung ist das Lüfterelement bevorzugt in saugender Anordnung anbringbar.

In einer ersten bevorzugten Ausführungsform weist das Abdeckelement eine Mehrzahl von separat ansteuerbaren Klappen auf, so dass die Öffnung der verschiedenen Öffnungsabschnitte in Stufen erfolgen kann, zum Beispiel indem jede der Klappen einer Stufe entspricht.

Im Interesse einer mechanisch sicheren und aerodynamisch vorteilhaften Ausbildung sind die Klappen dabei jeweils als zweiteilige Faltklappen ausgebildet.

Zur Anpassung an die bei der Mehrzahl der modernen Kraftfahrzeuge vorhandenen niedrigen Bauräume sind die Klappen dabei vorteilhaft seitlich neben dem Lüfterelement angeordnet, wobei die Bewegungsachsen der Klappen jeweils im Wesentlichen senkrecht orientiert sind.

Weiterhin bevorzugt ist zwischen einem dem Lüfterelement abgewandten Ende der Tauscherfläche und dem ersten Öffnungsabschnitt ein permanenter luftdurchlässiger Abschnitt vorgesehen, um die Anpassung an einen Teillastbetrieb zu optimieren. Besonders bevorzugt ist hierbei im Bereich des permanent luftdurchlässigen Abschnitts ein Luftleitelement zur Verringerung einer Rezirkulation vorgesehen. Dieses kann etwa ein Richtungsleitblech und/oder ein sperrendes Leitblech sein. Solche Luftleitelemente können auch ganz allgemein zwischen der Tauscherfläche und den Klappenelementen angeordnet sein.

Zur Erlangung einer besonders guten Anpassung an verschiedene Fahrzustände beträgt die Anzahl der separat ansteuerbaren Klappen mindestens drei.

In einer zweiten bevorzugten Ausführungsform der erfindungsgemäßen Vorrichtung ist das Abdeckelement ein insbesondere stufenlos verschiebbares, im Wesentlichen flächiges Element. Insbesondere vorteilhaft ist das Abdeckelement ein elastisches Rollo, welches bevorzugt in horizontaler Richtung bewegbar ist. Insgesamt ist durch das Vorsehen eines solchen im allgemeinen stufenlos verstellbaren Rollos als Abdeckelement eine besonders genaue Anpassung der Freigabe der Tauscherfläche in Abhängigkeit verschiedener Fahrzustände ermöglicht. Zweckmäßig ist derjenige Bereich, in dem das Rollo zuerst die Tauscherfläche freigibt, maximal von dem Lüfterelement entfernt, um die Gefahr der Rezirkulation, die insbesondere bei niedrigen Geschwindigkeiten besteht, gering zu halten.

Bei einer weiteren bevorzugten Ausführungsform umfasst zumindest ein Teil des Abdeckelements eine Mehrzahl von bewegbaren Klappen, wobei der erste Öffnungsabschnitt von zumindest einer ersten der Klappen ausgebildet ist, und wobei zumindest zwei der Klappen über eine gemeinsame Steuermechanik zueinander verzögert öffnungsfähig sind. Hierdurch wird auf einfache und kostengünstige Weise die Anzahl erforderlicher Krafteinleitungseinheiten verringert.

Bevorzugt sind dabei die Mehrzahl von Klappen als insbesondere separate bauliche Einheit in einem Rahmen aufgenommen, wodurch das Abdeckelement zumindest teilweise als separates Modul ausbildbar ist.

Weiterhin bevorzugt umfaßt die Steuermechanik eine Schiene mit zumindest zwei unterschiedlich ausgeformten Kulissenführungen, wobei jede der Kulissenführungen einer der Klappen zugeordnet ist. Die unterschiedlichen Kulissenführungen ermöglichen eine einfache, zuverlässige und flachbauende Möglichkeit der Realisierung einer geeigneten Steuermechanik.

Besonders bevorzugt ist eine Antriebskraft zur Bewegung der Klappen dabei auf nur einer Endseite der Klappen einleitbar, wodurch eine aufwendige Mechanik zur Übertragung der Kraft auf die andere Endseite oder eine weitere separate Krafteinleitungseinheit obsolet ist.

Die Aufgabe der Erfindung wird zudem durch eine Vorrichtung mit den Merkmalen des Anspruchs 1 gelöst. Durch die im wesentlichen senkrechte Anordnung der Klappen ist eine größere Flexibilität bei der Anpassung an die gegebenen Bauräume und Luftöffnungen von modernen Kraftfahrzeugen ermöglicht. Zudem kann durch die zumindest annähernde Ausrichtung der Klappen in Richtung der Schwerkraft eine Ausbalancierung der Gewichtskräfte der Klappen erzielt werden. Hierdurch kann die aerodynamische Formgebung der Klappen eine größere Flexibilität aufweisen und eine einfachere Antriebsmechanik für eine Klappenverstellung verwendet werden.

Hinsichtlich der Merkmale der abhängigen Ansprüche 2 bis 15 wird auf die obigen korrespondierenden vorstehenden Vorteile Bezug genommen.

Weitere Vorteile und Merkmale ergeben sich aus den nachfolgend beschriebenen Ausführungsbeispielen sowie aus den abhängigen Ansprüchen.

Nachfolgend werden drei Ausführungsbeispiele einer erfindungsgemäßen Vorrichtung beschrieben und anhand der anliegenden Zeichnungen näher erläutert.
- Fig. 1: zeigt eine schematische Ansicht einer erfindungsgemäßen Vorrichtung von oben, wobei ausgehend von einem vollständig geschlossenen Abdeckelement mehrere Zustände zunehmender Öffnung des Abdeckelements dargestellt sind.
- Fig. 2: zeigt eine Abwandlung der Vorrichtung aus Fig. 1.
- Fig. 3: zeigt eine schematische Ansicht einer zweiten Ausführungsform einer erfindungsgemäßen Vorrichtung von oben.
- Fig. 4: zeigt die Vorrichtung aus Fig. 3 von vorne.
- Fig. 5: zeigt eine räumliche Ansicht eines Abdeckelements eines dritten Ausführungsbeispiels einer erfindungsgemäßen Vorrichtung.
- Fig. 6: zeigt das Abdeckelement aus Fig. 5 aus einer anderen Perspektive.
- Fig. 7: zeigt eine schematische Draufsicht auf eine Steuerschiene des Abdeckelements aus Fig. 5.
- Fig. 8: zeigt eine räumliche Ansicht einer einzelnen Klappe des Abdeckelements aus Fig. 5.
- Fig. 9a: zeigt eine Steuerschiene mit einer geöffneten Klappe, wobei die Position der Klappe fixiert ist.
- Fig. 9b: zeigt eine Steuerschiene mit einer geschlossenen Klappe, wobei die Klappe in einer Position fixiert ist, in der die Klappe den Öffnungsabschnitt der Tauscherfläche gegenüber einem Luftdurchtritt abdichtet.

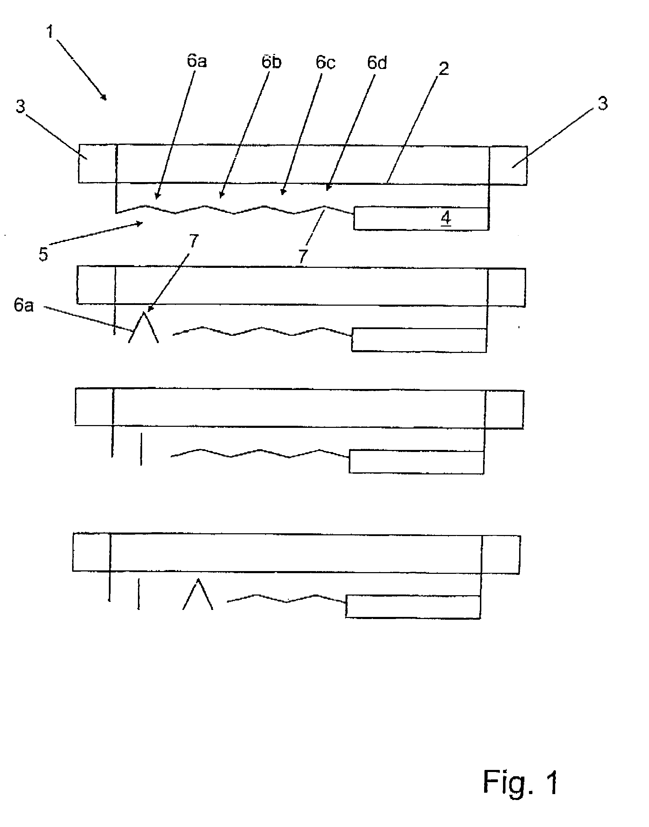

Fig. 1 zeigt einen Wärmetauscher 1, der eine Tauscherfläche 2 hat, wobei der Wärmetauscher 1 lediglich über die Tauscherfläche 2 von Luft durchströmbar ist. Im Bereich dieser Durchströmung bzw. der tauscherfläche sind die (nicht dargestellten) Tauscherrohre angeordnet, welche ausgehend von seitlichen Sammelbereichen 3 von einer Kühlmittelflüssigkeit durchströmt werden, so dass die Wärme der Kühlmittelflüssigkeit an die durchströmende Luft abgegeben wird.

Ein elektrisch angetriebenes Lüfterelement 4 ist in einem seitlichen Bereich der Tauscherfläche 2 saugend vor dem Wärmetauscher 1 angeordnet. In Querrichtung des Wärmetauschers 1 erstreckt sich das Lüfterelement 4 in etwa über ein Drittel der Länge der Tauscherfläche 2.

Neben dem Lüfterelement 4 ist ein Abdeckelement 5 vorgesehen, welches den Teil der Tauscherfläche 2, der nicht von dem Lüfterelement 4 überdeckt ist, abdeckt. Insbesondere hält das Abdeckelement 5 das Lüfterelement 4 in einer entsprechenden Ausnehmung nach Art einer an sich bekannten Lüfterhaube.

Das Abdeckelement 5 hat vier Klappen 6a, 6b, 6c und 6d, die jeweils nach Art einer zweiteiligen, eine Klappachse 7 umfassenden Faltklappe ausgebildet sind, wobei die Klappachse 7 sich in die Zeichnungsebene hinein und somit bezüglich der Einbaulage der Vorrichtung in senkrechter Richtung erstreckt. Jede der Klappen 6a-6d kann separat geöffnet werden. Dies erfolgt auf an sich bekannte Weise mittels jeweiliger Aktuatoren bzw. Stellglieder. Es kann auch eine Steuermechanik vorgesehen sein, die lediglich von einem Aktuator betätigt wird und mehrere Klappen wie dargestellt sequentiell nacheinander öffnet.

Die Erfindung funktioniert hinsichtlich der mehreren in Fig. 1 sequentiell von oben nach unten dargestellten Öffnungszustände des Abdeckelements 5 wie folgt:

In geschlossener Position sämtlicher der Klappen 6a-6d (obere Abildung) saugt der Lüfter 4 Luft durch den Wärmetauscher 1, wobei durch die im wesentlichen vollständige Überdeckung der Tauscherfläche 2 weitgehend ausgeschlossen ist, dass von dem Lüfter 4 austretende, erwärmte Luft ihren Weg zurück in den Lüftereintritt findet. Eine wirkungsgradsenkende Rezirkulation von Luft ist daher weitgehend vermieden. Die vollständig geschlossene Position des Abdeckelements 5 liegt zumeist in einem Leerlaufzustand des Fahrzeugs vor, in dem kein Fahrtwind auftritt, so dass der gesamte Luftdurchsatz von dem Lüfterelement 4 geleistet wird.

Wird in einem Teillastbereich des Fahrzeugsmotors bei gewisser, im allgemeinen geringer Fahrtgeschwindigkeit eine höhere Tauscherleistung erforderlich, so wird zunächst das gemäß Fig. 1 maximal von dem Lüfterelement 4 entfernte erste Klappenelement 6a geöffnet, wobei aufgrund der Ausbildung der Klappenelemente die Öffnung auch eine nur teilweise sein kann. Durch die Öffnung des ersten Klappenelements 6a wird ein erster Öffnungsabschnitt der Tauscherfläche für den Luftdurchtritt freigegeben, wobei dieser erste Öffnungsabschnitt im Vergleich zu den anderen Klappenelementen 6b-6d die größte Entfernung von dem Lüfterelement 4 hat. In diesem Betriebszustand ist das Lüfterelement 4 zumeist noch eingeschaltet, so dass die Vermeidung einer Rezirkulation gewünscht ist. Durch den größeren Abstand des ersten Klappenelements 6a im Vergleich zu den weiteren Klappenelementen 6b-6d ist eine Rezirkulation verhindert oder besonders klein gehalten.

Bei weiter zunehmender Last, die zumeist mit zunehmender Fahrtgeschwindigkeit einher geht, werden sukzessiv auch die weiteren Klappenelemente 6b-6d geöffnet, was in der Zeichnung Fig. 1 lediglich bis zu einer Teilöffnung des zweiten Klappenelements 6b dargestellt ist.

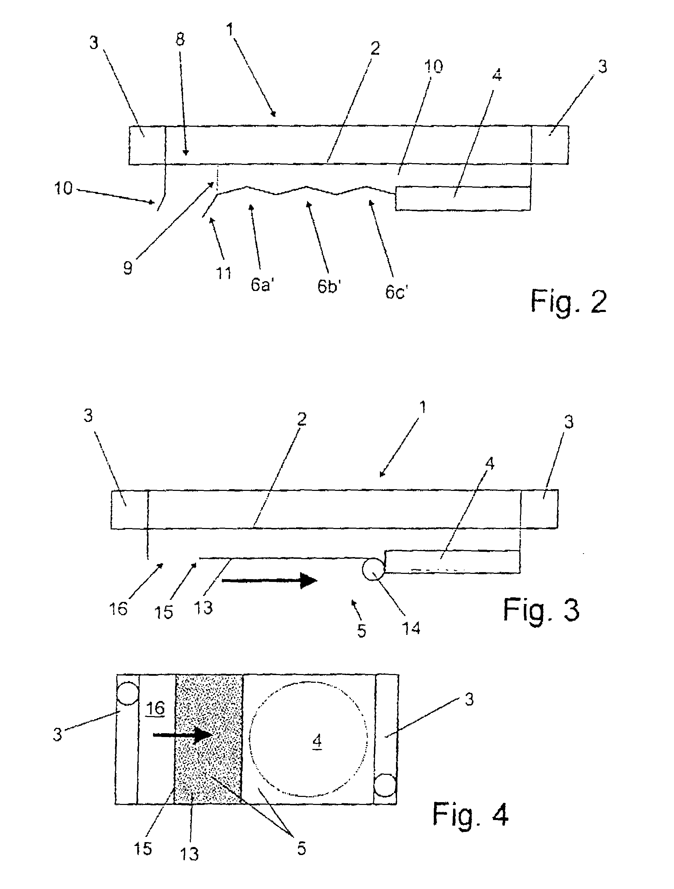

Fig. 2 zeigt eine Abwandlung der Ausführungsform aus Fig. 1, wobei zwischen einem Rand 2a der Tauscherfläche 2 und einer ersten, maximal von dem Lüftetelement 4 beabstandeten Faltklappe 6a' ein permanent luftdurchlässiger Abschnitt 8 vorgesehen ist und wobei insgesamt nur drei Faltklappen 6a', 6b', 6c' vorgesehen sind. Dies kann zur Feinanpassung oder auch zur Vermeidung einer übermäßig großen Anzahl von Klappen gewünscht sein.

Vorliegend reicht der gegebene Abstand des ersten Klappenelements 6a' von dem Lüfterelement 4 aus, um bei einem ausschließlichen Öffnen des ersten Klappenelements 6a' im Zuge eines Teillastbetriebs eine zumindest erhebliche Reduzierung einer Rezirkulation zu bewirken. Zur weiteren Verbesserung ist vorliegend zudem eine Trennwand 9 vorgesehen, die sich von der Tauscherfläche 2 bis zu einem dem Lüfterelement 4 abgewandten Ende des Klappenelements 6a' erstreckt, so dass bei geschlossenen Klappenelementen 6a'-6c' in Verbindung mit der Trennwand 9 ein weitgehend geschlossenes und nur über das Lüfterelement 4 zugängliches Volumen 10 zwischen Abdeckelement 5 und Tauscherfläche 2 vorhanden ist. Eine zu der Trennwand 9 ergänzende oder alternative Maßnahme zur Verringerung einer möglichen Rezirkulation sind Luftleitelemente 10, 11 im Ausgangsbereich des permanent luftdurchlässigen Abschnitts 8. Diese Luftleitelemente lenken die durch den Bereich 8 strömende Luft von dem Lüfterelement 4 weg.

Bei dem zweiten erfindungsgemäßen Ausführungsbeispiel gemäß Fig. 3 und Fig. 4 ist das Abdeckelement 5 nicht als diskrete Anzahl von starren Klappenelementen ausgebildet, sondern als Rollo mit einer flächigen und elastischen Bahn 13, die um eine Rolle 14 aufwickelbar ist. Die Rolle 14 ist dabei angrenzend an das Lüfterelement 4 angeordnet, so dass ein Ende 15 der elastischen Bahn 13 in einem vollständig geschlossenen Rollozustand (nicht dargestellt) einen maximalen Abstand von dem Lüfterelement 4 aufweist. Eine Freigabe der Tauscherfläche 2 mittels des Rollos ist stufenlos möglich. In den Abbildungen Fig. 3 und Fig. 4 befindet sich das Rollo jeweils in einem teilweise geöffneten Zustand, in dem ein erster Öffnungsabschnitt 16 freigegeben ist, so dass der gezeigte Zustand einem Teillastbereich des Fahrzeugmotors bei zumeist geringem Fahrtwind entspricht. Dadurch, dass der erste Öffnungsabschnitt 16 bedingt durch die zwischen ihm und dem Lüfterelement 4 noch vorhandene Restfläche des Rollos einen Mindestabstand von dem Lüfterelement 4 aufweist, ist eine Rezirkulation von Luft, die den Bereich 16 durchströmt hat, in das Lüfterelement 4 hinein weitgehend vermieden. Ein zweiter Öffnungsabschnitt zur weiteren, insbesondere volistandigen Freigabe der Tauscherfläche 2 kann durch ein z.B. vollständiges Aufrollen des Rollos erreicht werden. Auf diese Weise kann auch ein optimaler Luftdurchtritt etwa für einen Volllastbereich erzielt werden.

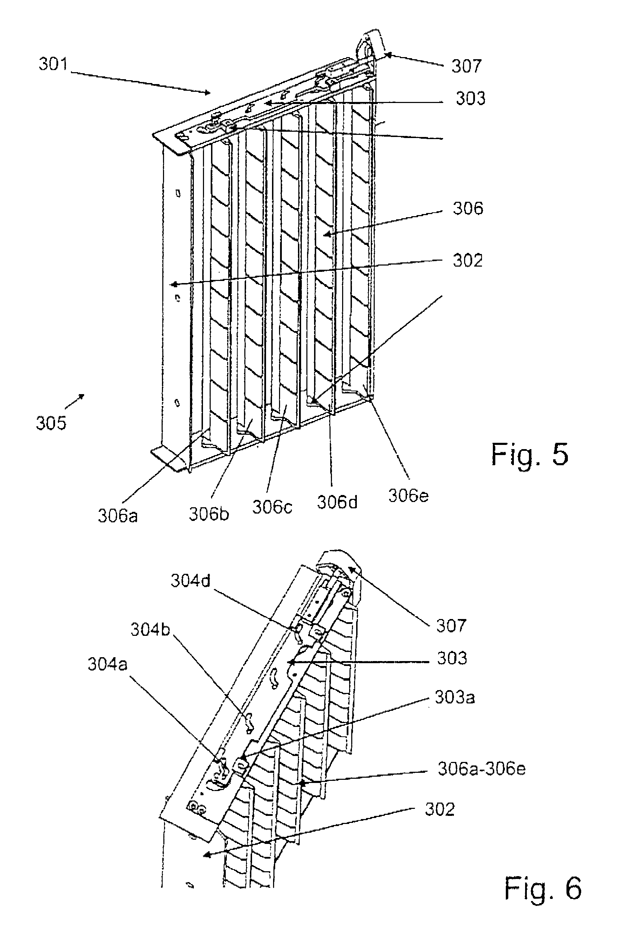

Im Falle des dritten bevorzugten Ausführungsbeispiels gemäß Fig. 5 bis Fig. 8 ist ein Abdeckelement 305 dargestellt, welches als bauliche Einheit oder als Modul aufgebaut ist. Ein weiteres Abdeckelement im Sinne der Patentansprüche kann etwa ein angrenzender Rahmen für den (nicht dargestellten) Lüfter sein.

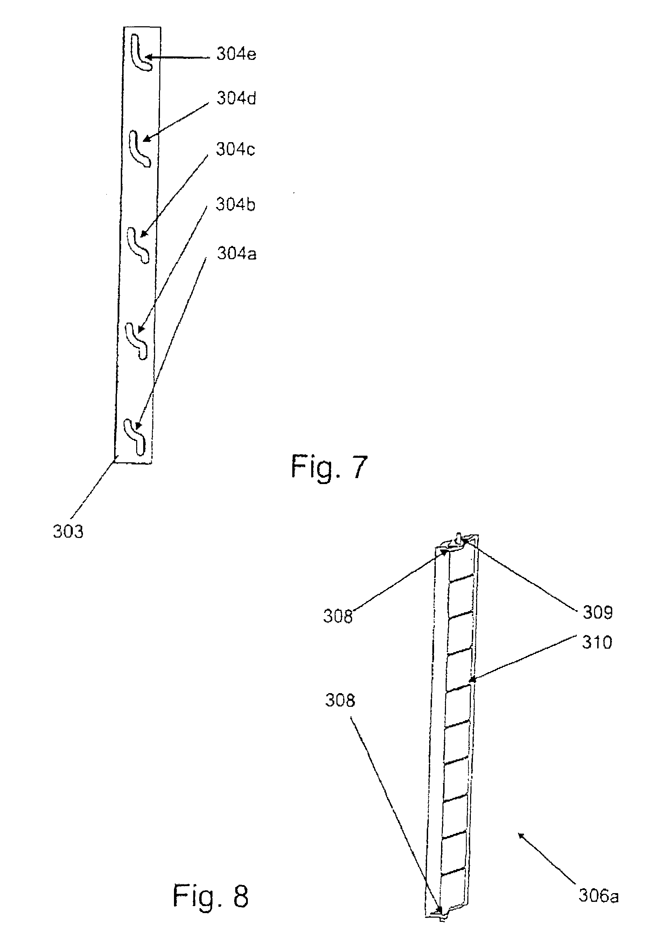

Das Abdeckelement des dritten Ausführungsbeispiels umfaßt fünf jeweils bewegbare Klappen 306a-306e, die parallel zueinander in einem starren Rahmen 302 über jeweils endseitige Drehzapfen 308 (siehe Fig. 8) drehbar gelagert sind. Je nach Drehstellung liegt somit eine geöffnete, teilweise geöffnete oder geschlossene Stellung der Klappe in dem Rahmen 302 vor Jede der Klappen hat auf der einen Endseite einen zu dem Drehzapfen 308 versetzten Betätigungszapfen 309, über den eine kraftunterstützte Verstellung der jeweiligen Klappe erfolgen kann.

Auf der Rahmenseite des Betätigungszapfens 309 ist eine Steuerschiene 303 in Führungsblöcken 303a linear verschiebbar in dem Rahmen 302 geführt. Endseitig der Schiene 303 ist diese über ein Gestänge mit einem nicht dargestellten, in einer Halterung 307 festlegbaren linearen Aktuator verbunden, mittels dessen sich eine Stellung der Schiene 303 relativ zu dem Rahmen 302 einstellen läßt. Als Aktuator sind dabei sämtliche bekannte und geeignete Antriebsvorrichtungen denkbar.

Die Steuerschiene 303 hat fünf Durchbrechungen 304a, 304b, 304c, 304d, 304e (siehe Fig. 7), die einen gewundenen Verlauf nach Art einer Kulissenführung aufweisen, in jede der Kulissenführungen 304a-304e greift einer der Betätigungszapfen 309 der fünf Klappen 306a-306e ein.

Aus der maßstabsgerechten Darstellung der Kulissen in Fig. 7 ist ersichtlich, dass jede der Kulissen 304a-304e insgesamt die gleiche Länge in Bewegungsrichtung der Schiene und die gleiche Breite senkrecht zur Bewegungsrichtung der Schiene aufweist. Dagegen besteht ein jeweiliger Unterschied zwischen den Kulissen darin, dass ein kurviger Teil auf jeweils unterschiedlicher relativer Position in Längsrichtung vorgesehen ist.

Ausgehend von der gezeigten geöffneten Position der Klappen 306a-306e wird zum Zwecke des Schließen des Abdeckelements 305 die Schiene 303 kraftunterstützt in ihrer Längsrichtung verschoben. Hierdurch wird zunächst die Klappe 306e geschlossen, wogegen die übrigen Klappen sich im Moment der ersten Bewegung der Schiene 303 noch nicht bewegen. Noch im Zuge der Schließbewegung der Klappe 303e wird dann bedingt durch die Ausformung der Kulisse 304d die Klappe 306d bewegt, bis zuletzt die erste Klappe 306a geschlossen wird. Entsprechend wird ausgehend von der (nicht dargestellten) geschlossenen Stellung zuerst die Klappe 306a teilweise geöffnet, bevor die Bewegung der nächsten Klappe 306b beginnt.

Jede der Kulissen 304a-304e hat einen parallel zu der Längsrichtung der Schiene 303 verlaufenden Abschnitt, der einer unveränderten Stellung der jeweiligen Klappe während einer Bewegung der Schiene 303 zugeordnet ist. Dieser Leerweg kann zum Beispiel bei 18mm Gesamtweg der Steuerschiene 6mm betragen. Es sind jedoch auch andere Verhältnisse von Leerweg zu Gesamtweg denkbar, je nachdem, wie stark die Bewegung der einzelnen Klappen zueinander verzögert sein soll.

Im vorliegenden Beispiel sind die Klappen jeweils baugleich. In einer weiteren Optimierung des Abdeckelements können sie jedoch auch jede für sich in Abhängigkeit von ihrer Position aerodynamisch optimiert sein. Die Klappen 306a-306e sind als Staudruckklappen ausgebildet und senkrecht orientiert. Durch die senkrechte Orientierung fällte die Massenwirkung weg. Der Staudruck kompensiert den Saugdruck eines bevorzugt saugend angeordneten Lüfters zunehmend mit der Fahrtgeschwindigkeit, so dass im geeigneten Moment des Öffnens zumeist nur eine geringe Kraft aufgewendet werden muß, um im wesentlichen die Reibungskräfte der Steuermechanik 301 zu überwinden.

Aus dem genannten Grund ist es mit geringem Aufwand möglich, die Mechanik so leichtgängig auszulegen, dass die Steuermechanik wie dargestellt nur an einer Endseite der Klappen angreifen muß. Dies ermöglicht einen einfachen Aufbau mit nur einem einzigen Aktuator und insbesondere ohne eine zusätzliche Mechanik zur Kraftübergabe auf die gegenüberliegende Seite.

In günstiger aerodynamischer Ausgestaltung weisen die Klappen zudem Rippen 310 auf, die einer verbesserten Leitung der die Klappen umströmenden Luft und gegebenenfalls einer Geräuschminderung dienen.

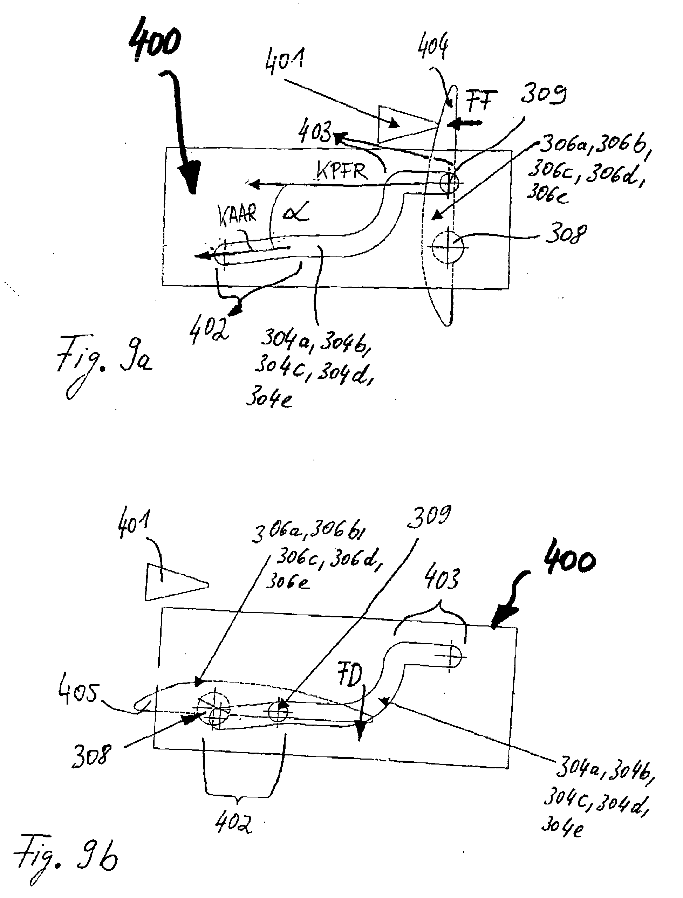

Figur 9a zeigt eine Steuerschiene 400 mit zumindest einer geöffneten Klappe 306a, 306b, 306c, 306d, 306e wobei die Position der zumindest einen Klappe 306a, 306b, 306c, 306d, 306e fixiert ist. Gleiche Merkmale sind mit den gleichen Bezugszeichen versehen wie in den vorherigen Figuren.

Die Steuerschiene 400 weist zumindest eine Kulissenführung 304a, 304b, 304c, 304d, 304e auf, die in die Steuerschiene 400 eingebracht ist. In der Steuerschiene wird ein Betätigungszapfen 309 zumindest einer Klappe 306a, 306b, 306c, 306d, 306e geführt, wobei dadurch die zumindest eine Klappe 306a, 306b, 306c, 306d, 306e von einer Klappenposition 404 in zumindest eine zweite Klappenposition 405 überführt wird bzw. werden kann.

Im dargestellten Ausführungsbeispiel befindet sich die zumindest eine Klappe 306a, 306b, 306c, 306d, 306e in der ersten Klappenposition 404. In dieser Klappenposition kann Luft durch zumindest einen Öffnungsabschnitt der Tauschfläche des zumindest einen Wärmetauschers strömen. In der Klappenposition 404 befindet sich der Betätigungszapfen 309 in einem Klappenpositionsfixierungsabschnitt 403 der Kulissenführung 304a, 304b, 304c, 304d, 304e. In einer anderen Ausführungsform kann die Fixierung der zumindest einen Klappe 306a, 306b, 306c, 306d, 306e durch ein Fixierelement 401 noch verbessert werden. Das Fixierelement 401, insbesondere ein Anschlag, übt dabei zumindest eine Kraft auf die zumindest eine Klappe 306a, 306b, 306c, 306d, 306e aus, dies Kraft erzeugt eine Gegenkraft, die Fixierkraft FF, welche auf das Fixierelement 401 wirkt und denselben Betrag aber die entgegengesetzte Richtung hat wie die Kraft auf die Klappe.

Aufgrund des Klappenpositionsfixierungsabschnitts 403 und/oder aufgrund des Fixierelements 401 wird das Spiel der Klappe 306a, 306b, 306c, 306d, 306e reduziert und diese können nicht mehr flattern. Ein Flattern der zumindest einen Klappe 306a, 306b, 306c, 306d, 306e bewirkt einen erhöhten Strömungswiderstand der Klappe und führt zum Verschleiß der zumindest einen Klappe. Fernern wird aufgrund des Klappenpositionsfixierungsabschnitts 403 und/oder aufgrund des zumindest einen Fixierelements 401 Flattergeräusche der zumindest einen Klappe verhindert.

Figur 9b zeigt eine Steuerschiene 400 mit einer geschlossenen Klappe 306a, 306b, 306c, 306d, 306e, wobei die Klappe 306a, 306b, 306c, 306d, 306e in einer zweiten Klappenposition 405 fixiert ist, in der die Klappe 306a, 306b, 306c, 306d, 306e den Öffnungsabschnitt der Tauscherfläche gegenüber einem Luftdurchtritt abdichtet, somit wird ein Luftdurchtritt durch den Öffnungsabschnitt verhindert. Gleiche Merkmale sind mit den gleichen Bezugszeichen versehen wie in den vorherigen Figuren.

Im dargestellten Ausführungsbeispiel befindet sich die zumindest eine Klappe 306a, 306b, 306c, 306d, 306e in der zweiten Klappenposition 405. In dieser Klappenposition kann keine Luft durch den zumindest einen Öffnungsabschnitt der Tauschfläche des zumindest einen Wärmetauschers strömen. In der Klappenposition 405 befindet sich der Betätigungszapfen 309 in einem Klappenabdichtabschnitt 402 der Kulissenführung 304a, 304b, 304c, 304d, 304e.

In einer anderen Ausführungsform wird die Fixierung der zumindest einen Klappe 306a, 306b, 306c, 306d, 306e in der Abdichtposition 405 durch das Fixierelement 401 und/oder durch ein weiteres nicht dargestelltes Fixierelement noch verbessert. Beim Abdichten übt die zumindest eine Klappe 306a, 306b, 306c, 306d, 306e eine Abdichtkraft FD auf zumindest eine weitere Klappe und/oder auf zumindest ein nicht dargestelltes Rahmenelement aus.

Aufgrund des Klappenabdichtabschnitts 402 und/oder aufgrund des Fixierelements 401 erhöht sich die Dichtkraft FD. Dies reduziert die Leckage, d.h. den Luftdurchtritt durch den Tauscheröffnungsabschnitt. Damit erhöht sich die abgeführte Wärmeleistung im Stand, insbesondere bei niedrigen Fahrzeuggeschwindigkeiten. Zusätzlich wird das Spiel der Klappe 306a, 306b, 306c, 306d, 306e reduziert oder sogar beseitigt. Der Verschleiß der Klappe 306a, 306b, 306c, 306d, 306e wird reduziert und Klappergeräusche werden unterbunden.

Der zumindest eine Klappenabdichtabschnitt 402 mit der Klappenabdichtabschnittsrichtung KAAR weist einen Winkel α zur Klappenpositionierfixierungsabschnittrichtung KPFR des Klappenpositionierfixierungsabschnitt 403 auf. Der Winkel α nimmt Werte zwischen 0° und 90°, insbesondere zwischen 0° und 50°, insbesondere zwischen 0° und 45°, insbesondere zwischen 0° und 40°, insbesondere zwischen 5° und 30°, insbesondere zwischen 7° und 20° an.

## Patentansprüche

1. Vorrichtung zur Regulierung eines Luftstroms zur Motorkühlung, umfassend
ein über einem Teil einer Tauscherfläche (2) eines luftdurchströmbaren Wärmetauschers (1) angeordnetes Lüfterelement (4), und
ein über einem weiteren Teil der Tauscherfläche (2) angeordnetes Abdeckelement (5, 305), wobei das Abdeckelement (5, 305) zum Durchlass von Luft zumindest teilweise selektierbar öffnungsfähig ist, und wobei das Abdeckelement (305) eine Mehrzahl von bewegbaren Klappen (6a-6d, 6a'-6c', 306a-306e) umfasst,
**dadurch gekennzeichnet,**
**dass** die Klappen (6a-6d, 6a'-6c', 306a-306e) im wesentlichen senkrecht angeordnet sind.

2. Vorrichtung nach Anspruch 1, **dadurch gekennzeichnet, dass** das Lüfterelement (4) in saugender Anordnung angeordnet ist.

3. Vorrichtung nach Anspruch 1 oder 2, **dadurch gekennzeichnet, dass** zumindest einige der Klappen (6a-6d, 6a'-6c', 306a-306e) jeweils separat ansteuerbar sind.

4. Vorrichtung nach einem der vorhergehenden Ansprüche, **dadurch gekennzeichnet, dass** die Klappen (6a-6d, 6a'-6c') als jeweils zweiteilige Faltklappen ausgebildet sind.

5. Vorrichtung nach einem der vorhergehenden Ansprüche, **dadurch gekennzeichnet, dass** die Klappen (6a-6d, 6a'-6c', 306a-306e) seitlich neben dem Lüfterelement (4) angeordnet sind, wobei Bewegungsachsen (7) der Klappen jeweils im wesentlichen senkrecht orientiert sind.

6. Vorrichtung nach einem der vorhergehenden Ansprüche, **dadurch gekennzeichnet, dass** zwischen einem dem Lüfterelement (4) abgewandten Ende der Tauscherfläche (2) und dem ersten Öffnungsabschnitt (6a') ein permanent luftdurchlässiger Abschnitt (8) vorgesehen ist.

7. Vorrichtung nach Anspruch 6, **dadurch gekennzeichnet, dass** im Bereich des permanent luftdurchlässigen Abschnitts (8) ein Luftleitelement (9, 10, 11) zur Verringerung einer Rezirkulation vorgesehen ist.

8. Vorrichtung nach einem der vorhergehenden Ansprüche, **dadurch gekennzeichnet, dass** die Anzahl der separat ansteuerbaren Klappen (6a-6d, 6a'-6c') mindestens drei beträgt.

9. Vorrichtung nach einem der vorhergehenden Ansprüche, **dadurch gekennzeichnet, dass** ein erster Öffnungsabschnitt (6a, 6a', 16) des Abdeckelements (5) selektierbar öffnungsfähig ist, welcher zur Vermeidung übermäßiger Rezirkulation einen Mindestabstand von dem Lüfterelement (4) aufweist, und dass zumindest ein zweiter Öffnungsabschnitt (6b-6d, 6b',6c') selektierbar öffnungsfähig ist, der im Wesentlichen an das Lüfterelement (4) angrenzt.

10. Vorrichtung nach einem der vorhergehenden Ansprüche, **dadurch gekennzeichnet, dass** zumindest zwei der Klappen über eine gemeinsame Steuermechanik (301) zueinander verzögert öffnungsfähig sind.

11. Vorrichtung nach einem der vorhergehenden Ansprüche, **dadurch gekennzeichnet, dass** die Mehrzahl von Klappen (306a, 306b, 306c, 306d, 306e) als insbesondere separate bauliche Einheit in einem Rahmen (302) aufgenommen sind.

12. Vorrichtung nach einem der vorhergehenden Ansprüche, **dadurch gekennzeichnet, dass** eine Steuermechanik (301) eine Schiene (303, 401) mit zumindest zwei unterschiedlich ausgeformten Kulissenführungen (304a, 304b, 304c, 304d, 304e) umfaßt, wobei jede der Kulissenführungen einer der Klappen (306a, 306b, 306c, 306d, 306e) zugeordnet ist.

13. Vorrichtung nach einem der vorhergehenden Ansprüche, **dadurch gekennzeichnet, dass** eine Antriebskraft zur Bewegung der Klappen (306a, 306b, 306c, 306d, 306e) auf nur einer Endseite der Klappen einleitbar ist.

14. Vorrichtung nach einem der vorhergehenden Ansprüche, **dadurch gekennzeichnet, dass** die Vorrichtung zumindest ein Element (401) zur Positionsfixierung zumindest einer Klappe (306a, 306b, 306c, 306d, 306e) in zumindest einer Klappenposition (404, 405) und/oder zur Klappenabdichtung aufweist.

15. Vorrichtung nach einem der vorhergehenden Ansprüche, **dadurch gekennzeichnet, dass** zumindest eine Kulissenführung (304a, 304b, 304c, 304d, 304e) zumindest abschnittsweise als Klappenabdichtabschnitt (402) und/oder als Klappenpositionsfixierungsabschnitt (403) ausgebildet ist.

16. Vorrichtung zur Regulierung eines Luftstroms zur Motorkühlung, umfassend
ein über einem Teil einer Tauscherfläche (2) eines luftdurchströmbaren Wärmetauschers (1) angeordnetes Lüfterelement (4), und
ein über einem weiteren Teil der Tauscherfläche (2) angeordnetes Abdeckelement (5), wobei das Abdeckelement (5) sich von dem Lüfterelement (4) bis zu einem Ende der Tauscherfläche (2) erstreckt und wobei das Abdeckelement (5) zum Durchlass von Luft zumindest teilweise selektierbar öffnungsfähig ist,
**dadurch gekennzeichnet,**
**dass** ein erster Öffnungsabschnitt (6a, 6a', 16) des Abdeckelements (5) selektierbar öffnungsfähig ist, welcher zur Vermeidung übermäßiger Rezirkulation einen Mindestabstand von dem Lüfterelement (4) aufweist, und dass zumindest ein zweiter Öffnungsabschnitt (6b-6d, 6b',6c') selektierbar öffnungsfähig ist, der im Wesentlichen an das Lüfterelement (4) angrenzt.

17. Vorrichtung nach Anspruch 16, **dadurch gekennzeichnet, dass** das Lüfterelement (4) in saugender Anordnung angeordnet ist.

18. Vorrichtung nach Anspruch 16 oder 17, **dadurch gekennzeichnet, dass** das Abdeckelement (5) eine Mehrzahl von separat ansteuerbaren Klappen (6a-6d, 6a'-6c') umfasst.

19. Vorrichtung nach Anspruch 18, **dadurch gekennzeichnet, dass** die Klappen (6a-6d, 6a'-6c') als jeweils zweiteilige Faltklappen ausgebildet sind.

20. Vorrichtung nach einem der Ansprüche 18 oder 19, **dadurch gekennzeichnet, dass** die Klappen (6a-6d, 6a'-6c') seitlich neben dem Lüfterelement (4) angeordnet sind, wobei Bewegungsachsen (7) der Klappen jeweils im wesentlichen senkrecht orientiert sind.

21. Vorrichtung nach einem der Ansprüche 18 bis 20, **dadurch gekennzeichnet, dass** zwischen einem dem Lüfterelement (4) abgewandten Ende der Tauscherfläche (2) und dem ersten Öffnungsabschnitt (6a') ein permanent luftdurchlässiger Abschnitt (8) vorgesehen ist.

22. Vorrichtung nach Anspruch 21, **dadurch gekennzeichnet, dass** im Bereich des permanent luftdurchlässigen Abschnitts (8) ein Luftleitelement (9, 10, 11) zur Verringerung einer Rezirkulation vorgesehen ist.

23. Vorrichtung nach einem der Ansprüche 18 bis 22, **dadurch gekennzeichnet, dass** die Anzahl der separat ansteuerbaren Klappen (6a-6d, 6a'-6c') mindestens drei beträgt.

24. Vorrichtung nach Anspruch 16 oder 17, **dadurch gekennzeichnet, dass** das Abdeckelement (5) ein insbesondere stufenlos verschiebbares, im wesentlichen flächiges Element (13) ist.

25. Vorrichtung nach Anspruch 24, **dadurch gekennzeichnet, dass** das Abdeckelement (5) ein elastisches Rollo ist.

26. Vorrichtung nach Anspruch 24 oder 25, **dadurch gekennzeichnet, dass** das Rollo (5) im wesentlichen in horizontaler Richtung bewegbar ist.

27. Vorrichtung nach einem der Ansprüche 16 bis 23, **dadurch gekennzeichnet, dass** das Abdeckelement (305) eine Mehrzahl von bewegbaren Kippen (306a, 306b, 306c, 306d, 306e) umfasst, wobei der erste Öffnungsabschnitt von zumindest einer ersten der Klappen (306a) ausgebildet ist, und wobei zumindest zwei der Klappen über eine gemeinsame Steuermechanik (301) zueinander verzögert öffnungsfähig sind.

28. Vorrichtung nach Anspruch 27, **dadurch gekennzeichnet, dass** die Mehrzahl von Klappen (306a, 306b, 306c, 306d, 306e) als insbesondere separate bauliche Einheit in einem Rahmen (302) aufgenommen sind.

29. Vorrichtung nach Anspruch 27 oder 28, **dadurch gekennzeichnet, dass** die Steuermechanik (301) eine Schiene (303, 400)) mit zumindest zwei unterschiedlich ausgeformten Kulissenführungen (304a, 304b, 304c, 304d, 304e) umfaßt, wobei jede der Kulissenführungen einer der Klappen (306a, 306b, 306c, 306d, 306e) zugeordnet ist.

30. Vorrichtung nach einem der Ansprüche 27 bis 29, **dadurch gekennzeichnet, dass** eine Antriebskraft zur Bewegung der Klappen (306a, 306b, 306c, 306d, 306e) auf nur einer Endseite der Klappen einleitbar ist.
